# EUROPEAN PATENT APPLICATION

(11) **EP 2 875 947 A1**
(43) Date of publication of application: **27.05.2015**
(21) Application number: 14194702.8
(22) Date of filing: 25.11.2014
(51) Int. Cl.: B32B 17/10, C08K 5/549

(54) **Laminated glazings**

(30) Priority: 25.11.2013 GB 201320707
(71) Applicant: Essex Safety Glass Limited, Witham, Essex CM8 3UQ (GB)
(72) Inventor: Sinden, Scott, Witham, Essex CM8 3UQ (GB); Sadeghi-Esfahlani, Shabnam, Witham, Essex CM8 3UQ (GB)
(74) Representative: ip21 Ltd

(57) **Abstract**

A laminated glazing comprises at least two glass layers, a fire resistant layer between said glass layers, and one or more layers of polymeric material; said layers of polymeric material comprising a reinforcing film incorporating polyhedral oligomeric silsesquioxane (POSS) nano-particles; or said layer being itself reinforced by polyhedral oligomeric silsesquioxane (POSS) nano-particles.

## Description

### Field of the Invention

The invention relates generally to laminated glazings.

The invention has particular applications in the field of thermal and impact resistance in laminated glazings and improvements to these glazings.

### Background to the Invention

The closest prior art known to the applicant is the incorporation of intumescent and thermoplastic materials into laminated glazings. The glazings and methods of producing glazings incorporating intumescent material are disclosed in patent applications US6379825, GB2258422, EP1937736, EP1912787, US2012263903 and US20120205600. Generally, the structure of these glazings comprises a number of transparent plies separated by intumescent material to provide the glazing with a fire resistant quality.

Prior art document EP2104608 comprises at least three transparent plies separated by at least two interlayers, one being a fire resistant interlayer and the other a plastic interlayer for both thermal and impact resistant glazing. The plastic interlayer of this glazing has a thickness of at least 2.5mm.

The following prior art documents are also acknowledged: US2013/0177748; WO2013/111990; US2014/0050909; US2007/0047077; US2013/0127202; WO2009/111196 and US2010/0273011. These documents relate to transparent laminates, polymer sheets, strengthened glass laminates and silicone compositions.

One of the objects of certain embodiments of the invention is to improve the physical and thermal properties of laminated glazings. Another object of certain embodiments of the invention is to improve the optical float quality of fire and impact resistant glazings.

It is a further object of certain embodiments of the invention to improve the ultraviolet absorption properties of laminated glazings and to improve the abrasion and scratch resistance of thermal and impact resistant glazings.

### Summary of the Invention

In a first broad independent aspect, the invention provides a laminated glazing comprising at least two glass layers, and one or more layers of polymeric material; at least one of said layers of polymeric material comprising a reinforcing film incorporating polyhedral oligomeric silsesquioxane (POSS) nano-particles; or at least one of said layers being itself reinforced by polyhedral oligomeric silsesquioxane (POSS) nano-particles.

This configuration provides improved thermal and impact resistance in the laminated glazing. The incorporation of a polyhedral oligomeric silsesquioxane (POSS) nano-particle into a film of said polymeric material, or the layer being itself reinforced by polyhedral oligomeric silsesquioxane (POSS) nano-particles, improves the resistance of the glazing to ballistic or thermal shock. The optical float quality and oxidative stability of the glazing is also improved. The use of POSS also improves the absorption of UV radiation, the abrasion and scratch resistance of the glazing and reduces flammability. Additionally, the POSS nano-particles are capable of being polymerised into transparent resins which can be easily applied to the layers of polymeric material.

Preferably, said laminated glazing incorporates a fire resistant layer located between said glass layers. This configuration provides the advantage of further improving the fire resistance of the laminated glazing.

Preferably, at least one of said at least two glass layers has a greater fire resistance than at least one other of said glass layers. This configuration provides the advantage of improving the fire resistance of the laminated glazing with or without the presence of a fire resistant layer between the glass layers.

Preferably, said laminated glazing comprises at least one layer of polymethyl-methacrylate (PMMA). The PMMA acts as a sacrificial layer, which is easy to coat with nano-particles such as POSS. PMMA is also straightforward to fabricate and is flexible, being compatible with different materials.

Preferably, said laminated glazing comprises at least one layer of polycarbonate (PC). The use of at least one layer of polycarbonate provides the laminated glazing with a transparent thermoplastic polymer with high impact resistance. The polycarbonate layer acts as an energy absorber.

Preferably, at least one layer of polymethyl-methacrylate (PMMA) is reinforced by polyhedral oligomeric silsesquioxane (POSS) nano-particles. This configuration provides the PMMA with improved physical and thermal resistance properties. This configuration also provides the layer(s) of PMMA with improved UV radiation absorption.

Preferably, at least one layer of polycarbonate (PC) is reinforced by polyhedral oligomeric silsesquioxane (POSS) nano-particles. This configuration provides the polycarbonate layer(s) with improved physical and thermal resistance properties. This configuration also provides the layer(s) with improved UV radiation absorption. It also improves the abrasion and scratch resistance of the laminated glazing.

Preferably, at least one of said layers of polymeric material comprises a polyhedral oligomeric silsesquioxane polyimide composite. This configuration further improves the heat and fire resistance of said layers. Polyimides are heat and fire resistant polymers. Incorporation of a POSS polyimide composite improves heat resistance qualities and results in a transparent resin.

Preferably, said laminated glazing further comprises one or more layers of silicone adhesive. This configuration provides an optically clear adhesive as an interlayer to join a number of the layers of the glazing together.

Preferably, said laminated glazing comprises at least two thermoplastic layers coated with a reinforcing film. This configuration provides increased impact resistance to the laminated glazing.

Preferably, each of the layers of polymeric material has a thickness in the range from and including 2.0mm to 12.0mm. This configuration provides the laminated glazing with preferred thermal and impact resistance qualities.

Preferably, said one or more layers of polymeric material has a thickness in the range from and including 3.0mm to 9.0mm. This configuration provides the laminated glazing with further preferred thermal and impact resistant qualities.

Preferably, at least two of said layers of glass or polymeric material are bonded together by at least one of polyurethane (PU), polyvinyl butyral (PVB), polyvinyl butyral nano-particles, or polyester film. This configuration provides greater impact performance and limits the propagation of spalls due to impact and thermal shocks to the laminated glazing. This configuration also improves the tensile strength and UV absorption properties of the glazing.

Preferably, said polyurethane (PU) film has a thickness in the range from and including 0.2mm to 1.6mm. This configuration provides the advantage of preferred impact performance and limitation of the propagation of spalls due to impact and thermal shock.

Preferably, said polyurethane (PU) film has a thickness in the range from and including 0.76mm to 1.27mm. This configuration provides the advantage of even further preferred impact performance of the laminated glazing.

Preferably, said polyvinyl butyral (PVB) or polyvinyl butyral nano-particles film has a thickness in the range from and including 0.36mm to 3.04mm. This configuration provides the advantage of preferred impact performance and limitation of the propagation of spalls due to impact and thermal shock. It also provides a preferred tensile strength and UV absorption performance.

Preferably, said polyvinyl butyral (PVB) or polyvinyl butyral nano-particles film has a thickness in the range from and including 0.76mm to 2.88mm. This configuration provides the advantage of even further preferred impact and spall limitation performance of the laminated glazing, as well as further preferred tensile strength and UV absorption performance.

Preferably, said fire resistant layer is an intumescent layer. This configuration provides a fire resistant layer which can effectively absorb thermal energy. When the laminated glazing is subject to increased thermal effects the intumescent layer absorbs energy and swells, thus increasing in volume and decreasing in density. The intumescent layer also releases vapour to provide a cooling effect.

Preferably, said intumescent layer comprises an inorganic silicate. This configuration provides the laminated glazing with preferred fire and heat resistant qualities, the intumescent layer being suitable to be positioned between two glass layers or two other layers. Yet more preferably, the intumescent layer is a hydrated alkali metal silicate (for example, sodium or potassium).

Preferably, said fire resistant layer has a thickness in the range from and including 0.3mm to 5.0mm. This configuration provides the laminated glazing with preferred thermal resistance qualities.

Preferably, said fire resistant layer has a thickness in the range from and including 0.3mm to 2.0mm. This configuration provides the laminated glazing with even further preferred thermal resistance qualities.

Preferably, said fire resistant layer comprises nano metal oxide particles selected from the group comprising: tin, indium, zinc, titanium, zirconium, vanadium oxide. This configuration provides the advantage of improved UV absorption as well as providing an anti-reflection layer to the laminated glazing.

Preferably, said nano metal oxide particles are sized in the range from and including 10nm to 80nm. This configuration provides the glazing with the preferred effects of the nano metal oxide particles.

Preferably, said intumescent layer comprises nano metal oxide particles and polyhydric alcohol. This configuration provides the advantage of improved performance when exposed to UV radiation. The polyhydric alcohol reduces the required thickness of the intumescent layer without compromising its functionality.

Preferably, said intumescent layer has a polyhydric alcohol content in the range from and including 1% to 20%. This configuration further improves performance when exposed the UV radiation and reduces the required thickness of the intumescent layer without compromising its functionality.

Preferably, said fire resistant layer is laminated with at least one of toughened glass, borosilicate, ceramic or float glass. This configuration provides the advantage of increasing the impact and thermal resistance of the laminated glazing as well as optical float quality.

Preferably, said laminate has a thickness in the range from and including 2.0mm to 8.0mm. This configuration provides the advantage of impact and thermal resistance, as well as improved optical float quality of the laminated glazing.

Preferably, said laminate has a thickness in the range from and including 2.0mm to 4.0mm. This configuration further improves the impact and thermal resistance of the laminated glazing.

Preferably, said fire resistant layer has water content in the range from and including 20% to 40% w/w. This configuration provides the advantage of allowing the intumescent layer to release vapour, when the glazing is subject to heat, which has a cooling effect.

Preferably, two layers of glass, each with an intumescent coating layer are bonded together so that the two intumescent coating layers are adjacent. This is particularly advantageous because the amount of time required for drying the layers is reduced compared to a single intumescent layer being dried in situ between the two layers of glass.

Preferably, the invention provides a method of producing a laminated glazing as described in claim 1, comprising the steps of:
- laminating at least two glass layers with a fire resistant layer; and
- bonding said glass layers to one or more polymeric layers; said layers of polymeric material comprising a reinforcing film incorporating polyhedral oligomeric silsesquioxane (POSS) nano-particles; or said layer being itself reinforced by polyhedral oligomeric silsesquioxane (POSS) nano-particles.

This method provides the advantage of producing a laminated glazing with improved performance quality. The incorporation of a polyhedral oligomeric silsesquioxane (POSS) nano-particle into a film on said polymeric material, or the layer being itself reinforced by polyhedral oligomeric silsesquioxane (POSS) nano-particles, improves the impact and thermal resistance of the glazing. The optical float quality and oxidative stability of the glazing is also improved. The use of POSS also improves the absorption of UV radiation, the abrasion and scratch resistance of the glazing and reduces flammability. Additionally, the POSS nano-particles are capable of being polymerised into transparent resins which can be easily applied to the layers of polymeric material.

Preferably, said method comprises the step of bonding one or more layers of silicone adhesive between said glass layers. This step provides the advantage of providing an optically clear adhesive as an interlayer to join a number of the layers of the glazing together.

Preferably, said method comprises the step of bonding at least two of said layers of glass or polymeric material together by at least one of polyurethane (PU), polyvinyl butyral (PVB), polyvinyl butyral nano-particles, or polyester film. This step provides the laminated glazing with greater impact resistance and limits the propagation of spalls due to impact and thermal shocks to the laminated glazing. This also improves the tensile strength and UV absorption properties of the glazing.

Preferably, said method comprises the step of incorporating nano metal oxide particles selected from the group comprising tin, indium, zinc, titanium, zirconium, vanadium oxide to said intumescent layer. The incorporation of these nano metal oxide particles provides the advantage of improved UV absorption as well as providing an anti-reflection layer to the laminated glazing.

Preferably, said method comprises the step of laminating said fire resistant layer with at least one of toughened glass, borosilicate, ceramic and float glass. This step provides the advantage of increasing the impact and thermal resistance of the laminated glazing as well as improving optical float quality.

Preferably, the method comprises the step of adding aqueous alkali metal silicate (sodium/potassium) to a starting solution of said fire resistant layer in a vacuum. This is particularly advantageous because the aqueous alkali metal silicate aids in degassing the fire resistant layer.

Preferably, the method comprises the step of adding a plasticiser, such as glycerol, to the fire resistant layer. This is particularly advantageous because the addition of a plasticiser plasticises the fire resistant layer.

Preferably, the method comprises the step of adding silicate solution to said fire resistant layer. This is particularly advantageous because the fire resistant performance of the fire resistant layer is improved.

Preferably, the method comprises the step of utilising thermal initiators, such as potassium persulphate and sodium acrylate during the polymerisation process. This is particularly advantageous because the bonding process of the polymerisation is increased.

Preferably, the method comprises the step of washing and drying the glass and heating to approximately 100°C prior to bonding with the fire resistant layer. This is particularly advantageous because the fire resistant layer is thereby allowed to dry more quickly and also avoids dissolution of air in the starting solution during the drying process and therefore avoids bubbles forming in the dried fire resistant layer.

Preferably, the method comprises the step of retaining said solution of said fire resistant layer on the surface of the glass using sealant tape. This is particularly advantageous because the use of sealant tape is less time consuming and reduces the wastage involved in trimming of cutting edges of glass compared to previous methods.

Preferably, the method comprises the step of backing and compacting the fire resistant layer in an autoclave at approximately 120°C, in a vacuum of preferably at 0.7 bar and pressure preferably less than 1 bar for further degassing.

### Brief Description of the Figures

Figure 1 shows a cross-sectional view of the laminated glazing of an embodiment of the invention.
Figure 2 shows a cross-sectional view of the laminated glazing of another embodiment of the invention.
Figure 3 shows a cross-sectional view of the laminated glazing of a further embodiment of the invention.

### Detailed Description of the Figures

Existing laminated glazings comprise a number of transparent plies separated by intumescent material to provide the glazing with a fire resistant quality. Other glazings additionally comprise two interlayers, one being a fire resistant interlayer and the other being a plastic interlayer for impact resistance.

The laminated glazing in accordance with an embodiment of the invention improves thermal and impact resistance in large panel sizes, together with improved optical float quality. In an embodiment, the laminated glazing comprises at least two glass layers, and one or more layers of polymeric material. The layers of polymeric material constitute a reinforcing film incorporating polyhedral oligomeric silsesquioxane (POSS) nano-particles, or the polymeric layer is itself reinforced by polyhedral oligomeric silsesquioxane (POSS) nano-particles.

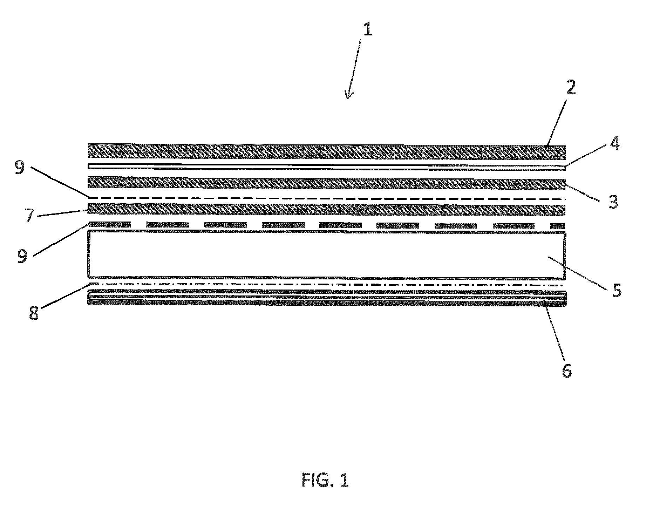

In a preferred embodiment shown in figure 1, the laminated glazing 1 comprises at least two glass layers 2 and 3 laminated with a fire resistant layer 4. The laminated glazing is subsequently bonded to two polymeric layers coated with polyhedral oligomeric silsesquioxane (POSS) nano-particles 10, the first polymeric layer 5 consisting of polymethyl-methacrylate (PMMA) and the second polymeric layer 6 consisting of polycarbonate (PC). None of the layers are shown to scale - these are for illustration purposes only.

In a further preferred embodiment, at least two of the layers of glass or polymeric material are bonded together by at least one of polyurethane (PU) 8, polyvinyl butyral (PVB) 9, polyvinyl butyral nano-particles, or polyester film in order to achieve greater impact performance and to limit the propagation of spalls due to ballistic and thermal shocks.

In the preferred embodiment of figure 1, the laminated glazing has the arrangement of: glass 2 (3.0mm), intumescent layer 4 (1.0mm), glass 3 (2.5mm), PVB 9 (0.76mm), toughened glass 7 (2.5mm), PVB 9 (2.88mm), POSS coated PMMA 5 (12.0mm), PU 8 (0.76mm), POSS coated PC 6 (3.0mm).

In an alternative embodiment, the laminated glazing has the arrangement of glass (3.0mm), intumescent (1.5mm), glass (2.4mm), intumescent (1.5mm), glass (2.4mm), POSS polyimide resin (0.5mm), glass (2.4 mm), intumescent (1.5mm), glass (2.4mm), intumescent (1.5mm), glass (3.0mm).

In another alternative embodiment, the laminated glazing has the arrangement of glass (3.0mm), intumescent (1.5mm), glass (2.4mm), intumescent (1.5mm), glass (2.4mm), PVB (1.52 mm), Pyrotech 660 glass (4.0mm), POSS polyimide resin (0.5 mm), PMMA (12.0mm), POSS polyimide resin (0.5mm), PU (1.27mm) POSS polyimide resin (0.5mm), PC (3.0mm).

In another alternative embodiment, the laminated glazing has the arrangement of Pyrotech 660 glass, PVB (1.52mm), glass (3.0mm), POSS polyimide resin (0.5mm), PMMA (9.0mm), POSS polyimide resin (0.5mm), PU (1.27mm) POSS polyimide resin (0.5mm), PC (3.0mm).

In yet another alternative embodiment, the laminated glazing has the arrangement of Pyrotech 660 glass, PVB (1.52mm), glass (3.0mm), PVB (3.04mm), POSS polyimide resin (0.5mm), PMMA (9.0mm), POSS polyimide resin (0.5mm), PU (1.27mm) POSS polyimide resin (0.5mm), PC (3.0mm).

In another alternative embodiment, the laminated glazing has the arrangement of glass (4.0mm), intumescent layer (2.0mm), glass (3.0mm) plus PVB (1.75mm), POSS polyimide resin (0.5mm), PMMA (9.0mm), PU (1.27mm), POSS polyimide resin (0.5mm), PC (3.0mm).

In an alternative embodiment, the fire resistant layer comprises a polyimide (PI) polymer. In a further alternative embodiment a POSS nanoparticle polyimide (PI) interlayer is used as an interlayer or a coating layer on the surface of a PMMA, PC or glass layer to increase the fire and impact resistance of these layers.

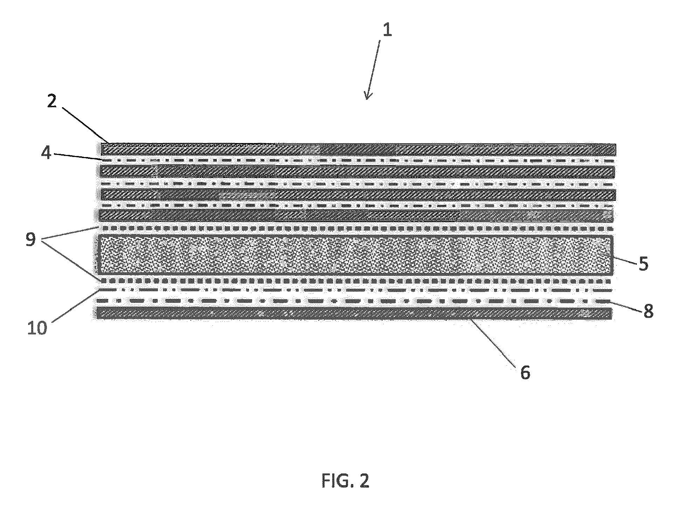

In an alternative embodiment, shown in figure 2 (although the layers are not shown to scale, and are provided for illustration purposes only) the laminated glazing has an arrangement of PVB (1.75mm), PMMA (12mm), PVB (1.75mm), POSS nanoparticle reinforce polyimide (PI)(1mm), PU (1.27mm), and PC (3mm).

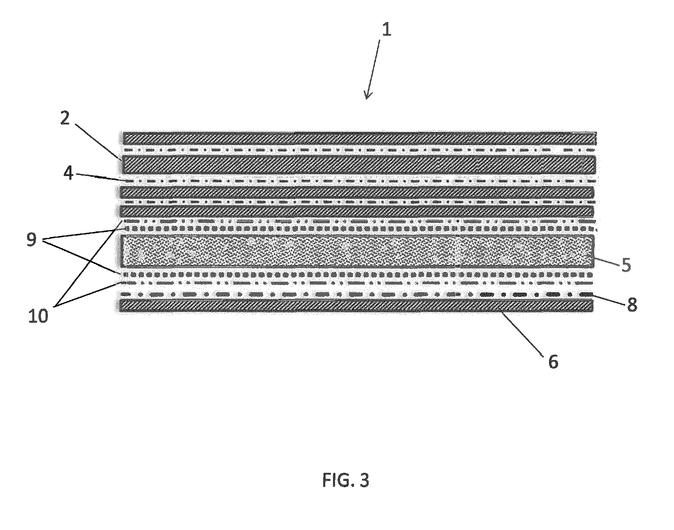

In another alternative embodiment, shown in figure 3 (although the layers are not shown to scale, and are provided for illustration purposes only) the laminated glazing has an arrangement of POSS nanoparticle reinforced polyimide (PI)(1mm), PBV (1.75), PMMA (9mm), PVB (1.75), POSS nanoparticle reinforce polyimide (PI)(1mm), PU (1.27), and PC (3mm).

In a preferred embodiment, the POSS coating is applied using dipping, spraying or a pour and dry method.

In a further preferred embodiment, a hollow gap is placed between the two assemblies and the edges of the assemblies are sealed using imidized nano POSS thermoplastic. The hollow gap improves the fire resistant qualities of the glazing.

In a preferred embodiment, the fire resistant layer 4 is inorganic silicate based and has a thickness in the range from and including 0.3mm to 5.0mm, and is more preferably in the range 0.3mm to 2.0mm. A thickness above 5.0mm does not yield the required fire resistant effects.

In a further preferred embodiment, the fire resistant layer 4 has nano sized additives and polyhydric alcohol to reduce the required thickness of the fire resistant layer without compromising its functionality. In this embodiment, the polyhydric alcohol content is from 1% to 20%, and is more preferably from 9% to 15% in order to improve the performance when exposed to UV radiation.

In a further preferred embodiment, nano metal oxide particles such as Tin, Indium, Zinc, Titanium, Zirconium or Vanadium oxide are used as an additive to the fire resistant layer 4 to improve UV absorption and to act as an anti-reflection layer. In this embodiment, the nano metal oxide particles are sized in the range from and including 10nm to 80nm.

In an even further preferred embodiment, the fire resistant layer 4 is laminated with at least one of toughened glass, borosilicate, ceramic or float glass, wherein the laminating material has a thickness is in the range between and including 2.0mm and 8.0mm.

In a further preferred embodiment, the thickness of the laminating material is in the range between and including 2.0mm and 4.0mm. This configuration provides the advantage of increasing the impact and thermal resistance of the laminated glazing 1 as well as improving optical float quality.

In a preferred embodiment, the POSS coated polymeric layers 5 and 6 have a thickness from 2.0mm to 12.0mm, more preferably from 3.0mm to 9.0mm. In this embodiment, the thickness of the layer of PMMA 5 is more than that of the PC layer 6, the former acting as a sacrificial layer and the latter as an energy absorber.

Polyhedral oligomeric silsesquioxanes are of hybrid organic-inorganic composition and possess many of the desirable physical characteristics of ceramics (thermal and oxidative stability) and polymers (flexibility and durability). Polyhedral oligomeric silsesquioxanes (POSS) are capable of being polymerised into resins so that they may be easily coated as a film on the polymeric layers. When coated onto a polymeric layer, POSS absorbs UV radiation and improves the thermal and physical resistance properties of the polymer as well as reducing its flammability. POSS nano-particles have high functionality that results in high cross-link density.

In a further preferred embodiment, at least one of the polymeric layers comprises a polyhedral oligomeric silsesquioxane polyimide composite. Polyimides are heat and fire resistant polymers, and incorporation of POSS nano-particle as a reinforcement improves the resistant properties of polymeric layers. A polyhedral oligomeric silsesquioxane polyimide composite also results in a transparent resin.

In a further preferred embodiment, optically clear silicone adhesive is used as an interlayer between two glass layers or for coating the surface of a glass layer. In alternative embodiments optically clear silicone adhesive is used as an interlayer between two layers or as a coating layer on the surface of another layer.

In a preferred embodiment the fire resistant layer is inorganic silicate based, and is even more preferably a hydrated alkali metal silicate (for example, sodium or potassium), that is dissolved in ultra-pure/deionized water with continuous stirring while heated up to approximately 40 to 45°C, in a vacuum, until the entire chemical is dissolved in water. To this solution, glycerol with approximately 99% purity and silica sol (with a particle size less than 10nm in diameter, and even more preferably less than 7nm in diameter) are added. Preferably, potassium persulphate thermal initiator is used for polymerisation to increase the curing and bonding process.

To aid in degassing the solution, aqueous alkali metal silicate (sodium/potassium) is added whilst stirring in a vacuum. Glycerol, or another plasticiser, is subsequently added to the solution to plasticise the fire resistant layer. Preferably the glycerol is of 99% purity. Silica Sol, preferably with particles of diameter less than 10nm, and even more preferably less than 7nm, is then added to further improve the fire resistant performance of the fire resistant layer. The bonding process of this polymerisation process is improved through the use of thermal initiators such as potassium persulphate and sodium acrylate.

In a preferred embodiment, the solution to produce the fire resistant layer consists of: 200g hydrated alkali metal silicate; 400g aqueous metal silicate; 65g glycerol (preferably at 99% purity); 35g ultrapure water; and 5g sodium acrylate < 1-5%, dissolved in water.

In an alternative embodiment, the solution to produce the fire resistant layer consists of: 160g hydrated alkali metal silicate; 440g aqueous alkali metal silicate; 60g glycerol (preferably at 99% purity); 25g ultrapure water; and 3g potassium persulphate <0.1-2%, dissolved in water.

In another alternative embodiment, the solution to produce the fire resistant layer, as shown in figure 2, consists of: 140g hydrated alkali metal silicate; 40g deionized water; 20g, 99% purity polyhydric glycerol; 2g tetramethyl ammonium hydroxide (TMAH); and 3g potassium persulphate. Preferably, the solution is mixed with approximately 89g silica sol having a particle size preferably less than 7nm in diameter.

In order to produce the laminate shown in figure 3, 180g of alkali metal silicate is added to deionized water. Preferably, the solution is stirred in a vacuum to aid the degassing of the solution. In this embodiment, 35g of approximately 99% purity glycerol is added to the solution to plasticise the composition. Approximately 89g of silica sol, having a particle size of less than 10nm and preferably less than 7nm, is subsequently added. Double sided acrylic foam adhesive tape is then used to create an edge barrier around three layers of float glass and the solution is poured onto the surface of the glass layers and cured under humidity, pressure and heat, and bonded in a vacuum to create a laminate with a thickness of approximately 16mm.

In a preferred embodiment, the fire resistant layer 4 is positioned between two glass layers 2 and 3, using a cast in place method, whereby the fire resistant material is poured between the glass layers 2 and 3 with sealant placed along the edges of the two glass layers. Preferably, the glass is washed and dried and heated to approximately 100°C prior to pouring of the fire resistant material. The fire resistant material is then cured by heating the glazing at a temperature from 50°C to 60°C until the material forms a gel through thermal polymerisation or UV polymerisation. In this preferred embodiment, the glazing is subsequently degassed through evaporation of excess water in an autoclave at a temperature in the range from 70°C to 100°C. Degassing of the glazing can also be achieved by subjecting the glazing to sub atmospheric pressure in the range from 1 mmHg to 250mmHg (0.122 to 33.3KPa).

In an alternative embodiment, a pour and dry method is used to form the fire resistant layer 4 between the two glass layers 2 and 3. In this method, the fire resistant material is dried on the surface of a glass layer. This process is repeated to build up the fire resistant layer. In this alternative embodiment the pour and dry method is used to dry excess water from the layer in order to achieve a fire resistant layer with a water content in the range from and including 20% to 40% w/w.

In a preferred embodiment, the solution is retained on the surface of the glass using sealant tape. Preferably the sealant tape comprises double sided acrylic foam adhesive tape or similar sealant tapes with edge barrier strips. In this preferred embodiment, the tape is removed after the fire resistant layer is dried and is bonded with further layers of toughened glass or intumescent coated toughened glass. The use of sealant tape is preferred over known methods of utilising a mixture of ortho-phosphoric acid and deionized water, methylhydroxyethyl cellulose and calcium phosphate in a vacuum condition. This known method is time consuming and the final mixture has a limited life span as it needs to be cut off after the fire resistant layer has dried. The use of sealant tape is less time consuming and reduces the wastage involved in trimming of cutting edges of glass. The sealant tape also provides a less processed edge barrier in comparison to anti-drip edge barriers.

Preferably, double sided acrylic foam adhesive tape is used to create an edge barrier around the glass layers. The solution is then poured onto the surface of each glass layer and cured under humidity, pressure and heat, and the solution is bonded to the glass layers by placing the glass layers and solution in a vacuum to create a lamination composite with a thickness of approximately 15mm. Preferably, the glass layers and solution are placed in a vacuum bag during the bonding process. Even more preferably, bonding is carried out at approximately 120°C and at 0.7 bar vacuum and less than 1 bar pressure in an autoclave.

In an alternative embodiment two layers of glass, each with an intumescent coating layer are bonded together. For example, two glass layer each with a 2.5mm intumescent layer can be bonded together to produce a 5.0mm intumescent layer between the glass layers. This reduces the time required for the drying process.

In another alternative embodiment, the layers are bonded together using a bag and autoclave method under a temperature from 80°C to 110°C and at a pressure below 13 bar, preferably less than 5.5 bar (550KPa).

Yet further preferred embodiment, the fire resistant layer is backed and compacted in an autoclave at approximately 120°C, in a vacuum of preferably at 0.7 bar and pressure preferably less than 1 bar for further degassing.

In an alternative embodiment, an alternative nano-particle, other than polyhedral oligomeric silsesquioxane (POSS), is used to increase the thermal and impact resistance of the polymeric layers 5 and 6.

In another embodiment, the polyhedral oligomeric silsesquioxane nano-particles may be incorporated into the polymeric material through copolymerisation, a non-covalently blending process, non-reactive blending or through a grafting process.

In another alternative embodiment, the laminated glazing 1 comprises a number of each layer (glass 2 and 3, fire resistant 4, polymeric 5 and 6 and coating) with the total number of layers being at least 7 and at most 30. Increasing the number of layers augments the performance of the glazing, depending on the arrangement of the layers.

In a further alternative embodiment, the laminated glazing 1 comprises at least three toughened glass layers, each having a thickness in the range from and including 2.0mm to 8.0mm and more preferably from 2.0mm to 4.0mm.

In an alternative embodiment, a polyvinyl butyral nano composite, incorporating nano zinc oxide or titanium oxide particles, is used to improve the tensile strength, elongation and UV absorption of the glazing. In this alternative embodiment, the nano particles are dispersed uniformly in the polyvinyl butyral using a melt extrusion process.

In one alternative embodiment, where an increased fire resistance is required, the layers of glass and fire resistant material are increased in number in order to meet minimum requirements. In another alternative embodiment, where an increased impact resistance is required, the number of layers of PMMA, PC, PU and PVB are increased in order to meet certain requirements.

In another alternative embodiment, a POSS polyimide composite is used as a coating layer on a surface of float glass.

In a further alternative embodiment, the fire resistant layer comprises a polyimide (PI) polymer.

Preferably, each of the components is transparent.

## Claims

1. A laminated glazing comprising at least two glass layers, a fire resistant layer between said glass layers, and one or more layers of polymeric material; said layers of polymeric material comprising a reinforcing film incorporating polyhedral oligomeric silsesquioxane (POSS) nano-particles; or said layer being itself reinforced by polyhedral oligomeric silsesquioxane (POSS) nano-particles.

2. A laminated glazing according to claim 1, comprising at least one layer of polymethyl-methacrylate (PMMA), preferably reinforced by polyhedral oligomeric silsesquioxane (POSS) nano-particles.

3. A laminated glazing according to either claim 1 or claim 2, comprising at least one layer of polycarbonate (PC), preferably reinforced by polyhedral oligomeric silsesquioxane (POSS) nano-particles.

4. A laminated glazing according to any of the preceding claims, wherein at least one of said layers of polymeric material comprises a polyhedral oligomeric silsesquioxane polyimide composite.

5. A laminated glazing according to any of the preceding claims, further comprising one or more layers of silicone adhesive.

6. A laminated glazing according to any of the preceding claims, comprising at least two thermoplastic layers coated with a reinforcing film.

7. A laminated glazing according to any of the preceding claims, wherein said one or more layers of polymeric material has a thickness in the range from and including 2.0mm to 12.0mm, and more preferably in the range from and including 3.0mm to 9.0mm.

8. A laminated glazing according to any of the preceding claims, wherein at least two of said layers of glass or polymeric material are bonded together by at least one of polyurethane (PU), polyvinyl butyral (PVB), polyvinyl butyral nano-particles, or polyester film.

9. A laminated glazing according to claim 8, wherein said polyurethane (PU) has a thickness in the range from and including 0.2mm to 1.6mm, and more preferably in the range from and including 0.76mm to 1.27mm.

10. A laminated glazing according to claim 8, wherein said polyvinyl butyral (PVB) or polyvinyl butyral nano-particles has a thickness in the range from and including 0.36mm to 3.04mm, and more preferably in the range from and including 0.76mm to 2.88mm.

11. A laminated glazing according to any of the preceding claims, wherein said fire resistant layer is an intumescent layer, preferably comprising an inorganic silicate or a hydrated alkali metal silicate.

12. A laminated glazing according to any of the preceding claims, wherein said fire resistant layer has a thickness in the range from and including 0.3mm to 5.0mm, more preferably in the range from and including 0.3mm to 2.0mm.

13. A laminated glazing according to any of the preceding claims, wherein said fire resistant layer comprises nano metal oxide particles selected from the group comprising: tin, indium, zinc, titanium, zirconium, vanadium, preferably sized in the range from and including 10nm to 80nm.

14. A laminated glazing according to claim 13, wherein said intumescent layer comprises nano metal oxide particles and polyhydric alcohol, preferably having a polyhydric alcohol content in the range from and including 1% to 20%.

15. A laminated glazing according to any of the preceding claims, wherein said fire resistant layer is laminated with at least one of toughened glass, borosilicate, ceramic or float glass.

16. A laminated glazing according to claim 15, wherein said laminate has a thickness in the range from and including 2mm to 8mm, and more preferably in the range from and including 2.0mm to 4.0mm.

17. A laminated glazing according to any of claims 11 to 16, wherein said intumescent layer has water content in the range from and including 20% to 40%.

18. A laminated glazing according to any of the preceding claims, wherein two layers of glass, each with an intumescent coating layer are bonded together so that the two intumescent coating layers are adjacent.

19. A method of producing a laminated glazing as described in any of the preceding claims, comprising the steps of:
• laminating at least two glass layers with a fire resistant layer; and
• bonding said glass layers to one or more polymeric layers; said layers of polymeric material comprising a reinforcing film incorporating polyhedral oligomeric silsesquioxane (POSS) nano-particles; or said layer being itself reinforced by polyhedral oligomeric silsesquioxane (POSS) nano-particles.
